# EUROPÄISCHE PATENTSCHRIFT

(11) **EP 1 097 022 B1**
(45) Veröffentlichungstag und Bekanntmachung des Hinweises auf die Patenterteilung: **17.09.2003**
(21) Anmeldenummer: 99942733.9
(22) Anmeldetag: 01.07.1999
(51) Int. Cl.: B23K 26/04

(54) **VERFAHREN UND ANORDNUNG ZUM KALIBRIEREN EINER LASERBEARBEITUNGSMASCHINE ZUM BEARBEITEN VON WERKSTÜCKEN**
METHOD AND DEVICE FOR CALIBRATING A WORKPIECE LASER-PROCESSING MACHINE
PROCEDE ET DISPOSITIF POUR ETALONNER UNE MACHINE D'USINAGE DE PIECES PAR LASER

(30) Priorität: 13.07.1998 DE 19831340
(43) Veröffentlichungstag der Anmeldung: 09.05.2001
(73) Patentinhaber: SIEMENS AKTIENGESELLSCHAFT, 80333 München (DE)
(72) Erfinder: MÜLLER, Lothar, D-69124 Heidelberg (DE); POLGAR, Mladen, D-76297 Stutensee (DE); DE STEUR, Hubert, B-9031 Drongen (BE); VAN BIESEN, Mark, B-9000 Gent (BE); ROTH, Friedbert, D-76706 Dettenheim (DE)
(86) Internationale Anmeldenummer: DE9901914
(87) Internationale Veröffentlichungsnummer: WO00003833

(56) Entgegenhaltungen:
- WO-A-97/25177
- DE-A- 4 437 284
- US-A- 4 584 455
- US-A- 5 670 068

## Beschreibung

Die Erfindung bezieht sich auf ein Verfahren und eine Anordnung zur Kalibrierung einer Laserbearbeitungsmaschine zum Bearbeiten von Werkstücken.

Die Bearbeitung von Werkstücken mit Lasern bekommt zunehmend Bedeutung vor allem im Bereich der Mikro-Bearbeitung, zum Beispiel bei der Laserdirektstrukturierung, beim Laserbohren, beim Laserschmelzen, beim Laserlöten, beim Laserbeschriften und beim Laserschneiden. Beim Laserbohren und beim Strukturieren von Verdrahtungskomponenten (Leiterplatten und Multichipmodulen) können Löcher und Leiterstrukturen mit Strukturabmessungen <50 µm hergestellt werden. Muster mit Leiterbahnstrukturen von 20 µm sind bereits demonstriert. Bei diesen Strukturfeinheiten spielt die Genauigkeit eine sehr große Rolle. Die Zielvorstellung liegt bei <10 µm. Die Ungenauigkeit bei aufeinanderfolgenden Bearbeitungsschritten, zum Beispiel Bohren und Strukturieren auf vorgeformten Spritzgießteilen oder Substraten, ist noch erheblich zu reduzieren. Denn diese Ungenauigkeit bestimmt in großem Maße die erreichbare Strukturabmessung, zum Beispiel müssen zum sicheren Trennen von parallel laufenden Leiterbahnen entsprechend große Toleranzen berücksichtigt werden, die dann zu großen Abständen der Leiterbahnen untereinander und damit zu großen Strukturabmessungen führen würden.

Aus DE 44 37 284 ist ein Verfahren zur Kalibrierung einer Steuerung zur Ablenkung eines Laserstrahls bekannt, bei dem ein lichtempfindliches Medium mit einem Laserstrahl an vorgegebenen Positionen zum Erzeugen eines Testbilds bestrahlt wird und anschließend in einer separaten Vorrichtung digitalisierte Einzelbilder von Bildausschnitten des Testbilds erzeugt werden und daraus Korrekturdaten für die Steuerung zur Ablenkung des Laserstrahls ermittelt werden. Die separate Vermessung des Testbilds ist zeitaufwendig und es wird eine separate Vorrichtung zur Vermessung benötigt, außerdem wird durch dieses Verfahren nur die gesamte Laserstrahlanordnung kalibriert, eine detaillierte Kalibrierung einzelner Kompoenten ist nicht möglich.

Aus US 4,584,455 ist eine Maschine zum Bearbeiten von Werkstücken mittels Laserstrahlen bekannt, die neben einem Bearbeitungs-Laserstrahl einen dazu überlagerten Laserstrahl im sichtbaren Bereich zur Verfügung stellt, dessen Position auf einem Werkstück mit Hilfe einer Kamera vermessen wird. Diese gemessene Position wird mit einer Sollposition verglichen und der Bearbeitungs-Laserstrahl so gesteuert, daß die Differenz zwischen der Sollposition und der gemessenen Position berücksichtigt wird. Dabei hat die Kamera nur ein Gesichtsfeld, welches einen Teil des Werkstücks umfaßt, so daß Abweichungen, die sich in anderen Teilen des Werkstücks widerspiegeln, nicht berücksichtigen lassen.

Es ist daher die Aufgabe der Erfindung, ein schnelles und reproduzierbares Verfahren und eine Anordnung zur Kalibrierung einer Laserbearbeitungsmaschine anzugeben, die eine hochgenaue Bearbeitung von Werkstücken im gesamten Werkstückbereich sicherstellt.

Die Aufgabe wird erfindungsgemäß gelöst durch ein Verfahren gemäß Patentanspruch 1 und eine Anordnung gemäß Patentanspruch 6.

Beim erfindungsgemäßen Verfahren wird die optische Abbildung durch zwei voneinander getrennte und aufeinanderfolgende Verfahrensschritte charakterisiert. Dabei werden zunächst die Ablenkeinrichtung für den Laserstrahl und das Objektiv vermessen, indem eine Kalibrierplatte anstelle des Werkstücks vor dem Objektiv positioniert wird, und daß vom Objektiv und der Ablenkeinrichtung erzeugte Bild dieser Kalibrierplatte durch eine Kamera vermessen wird. Das Gesichtsfeld der Kamera wird dabei von der Ablenkeinrichtung gesteuert über die Kalibrierplatte bewegt. Dadurch wird der gesamte Bereich, den ein Werkstück einnehmen kann, kalibriert. Da die Ablenkeinrichtung und das Objektiv immer gemeinsam im Strahlengang verbleiben, kann der durch diese beiden Einheiten hervorgerufene Abbildungsfehler in der Kamera analysiert, abgespeichert und bei der späteren Bearbeitung von Werkstücken berücksichtigt werden. Im zweiten Schritt werden die Komponenten, die den Laserstrahl erzeugen, charakterisiert. Dazu schreibt der Laserstrahl, der durch eine Laserquelle erzeugt und eine Einrichtung zum Formen des Laserstrahls geformt wird, über die Ablenkeinrichtung ein vorgegebenes Muster (Testmarkierung) auf eine Testplatte. Diese Testmarkierung wird können anschließend vermessen und damit, unter Berücksichtigung der bereits ermittelten Abbildungsfehler der Ablenkeinrichtung und des Objektivs, erfolgt ein Rückschluß auf den optischen Versatz, der durch die Laserquelle und die Einrichtung zum Formen des Laserstrahls hervorgerufen wird. Der optische Versatz ist dabei der Unterschied zwischen einer vorgegebenen Sollposition und der Istposition der Testmarkierung. Auch dieser optische Versatz wird abgespeichert und bei einer späteren Verarbeitung von Werkstücken berücksichtigt. Das Verfahren kommt ohne besondere Einrichtung zum Vermessen der Testmarkierungen aus, wenn, wie in Anspruchs 2 in vorteilhafter Weise geschildert, die Kamera über die Ablenkeinrichtung und das Objektiv die Testplatte vermißt.

Der optische Aufbau für das Verfahren gestaltet sich nach Patentanspruch 3 besonders vorteilhaft, wenn ein für das Laserlicht transparenter Spiegel so in den Strahlengang zwischen der Einrichtung zum Formen des Laserstrahls und der Ablenkeinheit angeordnet ist, daß er das Licht für die Vermessung der Kalibrierplatte und/oder der Testplatte in die Kamera reflektiert.

In vorteilhafter Weise wird der Einfluß von Werkstücken auf die optische Abbildung durch die Weiterbildung gemäß Anspruch 4 berücksichtigt. Dazu werden auf dem Werkstück angeordnete Referenzpunkte mit der Kamera aufgenommen und anschließend die gemessenen Einflüsse abgespeichert und bei der späteren Bearbeitung berücksichtigt.

So wird besonders bei der Verwendung des Verfahrens gemäß Anspruch 5 bei der Strukturierung von nichtebenen Flächen von Werkstücken der Einfluß der Nichtebenheit durch die zuvor bereitgestellten Daten berücksichtigt, so daß auch beispielsweise gewölbte Substrate mit der Laserbearbeitungsmaschine beschrieben werden können.

Zur vorteilhaften Durchführung eines der Verfahren dient die Anordnung gemäß Anspruch 6, in der die für das Verfahren erforderlichen Einrichtungen vorhanden sind.

Für die Bearbeitung von gewölbten Werkstücken ist eine Anordnung gemäß Anspruch 7 in vorteilhafter Weise vorgesehen, bei der durch eine Einrichtung zur Modulierung des optischen Weges der Brennpunkt der Abbildung durch das Objektiv an die entsprechende Wölbung des Werkstücks angepaßt wird.

Die Erfindung wird anhand von Ausführungsbeispielen gemäß den Figuren der Zeichnung näher erläutert. Dabei zeigen
Figur 1 den schematischen Aufbau einer Laserbearbeitungsmaschine beim Strukturieren und/oder Vermessen eines Werkstücks oder einer Testplatte,
Figur 2 den schematischen Aufbau einer Laserbearbeitungsmaschine beim Vermessen einer Kalibrierplatte und
Figur 3 den schematischen Aufbau einer Laserbearbeitungsmaschine beim Strukturieren eines Werkstücks.

Dabei ist eine Laserbearbeitungsmaschine 1 dargestellt, bei der mittels eines Laserstrahls 2 eine Struktur in ein Werkstück 14 eingeschrieben wird. Die Struktur kann dabei durch Bohren, Schmelzen, Löten oder Schneiden entstehen. Der Laserstrahl 2 wird von einer Laserquelle 4 erzeugt und durch eine Einrichtung 5 zum Aufweiten des Laserstrahls 2 aufgeweitet. Zur Modulation des optischen Weges des Laserstrahles 2 ist im Strahlengang anschließend eine Einrichtung zur Modulation 6 angeordnet, bevor der Laserstrahl durch eine Ablenkeinrichtung 7 und ein Objektiv 8 auf das - in diesem Beispiel gewölbte - Werkstück 14 abgebildet wird. In der Ablenkeinrichtung 7 sind dabei beispielsweise zwei senkrecht zueinander angeordnete, nicht dargestellte Spiegel vorgesehen, die den Laserstrahl über die Fläche des Werkstücks 14 bewegen, so daß durch diesen abgelenkten Laserstrahl 9 die gesamte Fläche des Werkstücks 14 bearbeitet werden kann. Die Einrichtung 5 zum Aufweiten des Laserstrahls und die Einrichtung 6 zur Modulation des optischen Wegs des Laserstrahls 2 bilden dabei eine Einrichtung zum Formen des Laserstrahls 2. Die Einrichtung 6 zur Modulation des optischen Weges des Laserstrahls 2 wird durch eine Steuereinrichtung 13 gesteuert. Dadurch wird der Brennpunkt des Laserstrahls 2 nach dem Objektiv 8 in Z-Richtung, d.h. in Ausbreitungsrichtung des Laserstrahls 2, verschoben. Durch diese Steuerung läßt sich der Brennpunkt des Laserstrahls 2 an eine gewölbte Struktur eines Werkstücks 14 anpassen. Zum Vermessen der Abbildungsfehler der Ablenkeinrichtung 7 und des Objektivs 8 ist ein teildurchlässiger Spiegel 10 im Strahlengang zwischen der Einrichtung 6 zur Modulation des optischen Weges und der Ablenkeinrichtung 7 angeordnet. Dieser Spiegel 10 ist beispielsweise transparent für den Laserstrahl 2 und reflektiert das durch das Objektiv 8 und die Ablenkeinrichtung 7 aus der Richtung des Werkstücks 14 kommende Licht in eine Kamera 11, die ebenfalls zur Auswertung mit der Steuereinrichtung 13 verbunden ist. Nicht dargestellt ist die ebenfalls mögliche Ausführungsform, daß der Spiegel 10 transparent für das Licht aus der Richtung des Werkstücks 14 ist und den Laserstrahl 2 in Richtung des Werkstücks 14 reflektiert.

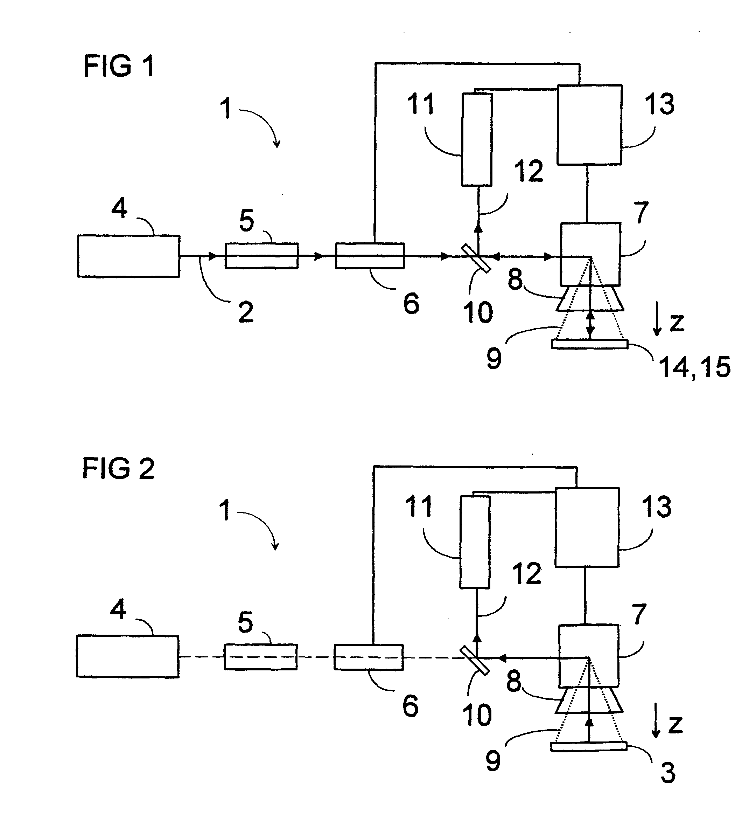

Das Verfahren zum Kalibrieren der Laserbearbeitungsmaschine 1 läuft nun folgendermaßen ab. Wie in Figur 2 dargestellt ist, wird zunächst eine Kalibrierplatte 3 mit auf der Kalibrierplatte 3 befindlichen Mustern (beispielsweise einem Gitter mit vorgegebenem Gitterabstand) durch das Objektiv 8 und die Ablenkeinrichtung 7 über den Spiegel 10 auf die Kamera 11 abgebildet. Die Steuereinheit 13 steuert dabei die Ablenkeinrichtung 7 derart, daß der Strahlengang 12 der Abbildung der Kalibrierplatte 3 über die gesamte Kalibrierplatte 3 bewegt wird. Anhand der Markierungen der Kalibrierplatte 3 läßt sich der Strahlengang und damit die Abbildungsfehler des Objektivs 8, der Ablenkeinrichtung 7, des Spiegels 10 sowie der Kamera 11 charakterisieren. Die erkannten Abbildungsfehler werden in der Steuereinrichtung 13 gespeichert und werden bei der anschließenden Bearbeitung von Werkstücken 3 kompensiert.

Im zweiten Schritt des Verfahrens wird anstelle der Kalibrierplatte 3 eine Testplatte 15, beispielsweise aus Aluminium, vor das Objektiv positioniert. Der Laserstrahl 2 schreibt dann über eine vorgegebene Steuerung der Ablenkeinrichtung 7 ein vorgegebenes Muster (Testmarkierung) auf die Testplatte 15. Die Position dieser Testmarkierung wird dann über den Strahlengang der Abbildung der Kalibrierplatte entsprechend über den Spiegel 10 auf die Kamera 11 abgebildet. In der Steuereinrichtung 13 wird unter Berücksichtigung der bereits ermittelten Abbildungsfehler der optische Versatz, der beim Strukturieren der Testmarkierung aufgetreten ist, ermittelt, abgespeichert und bei der Bestückung von Werkstücken berücksichtigt.

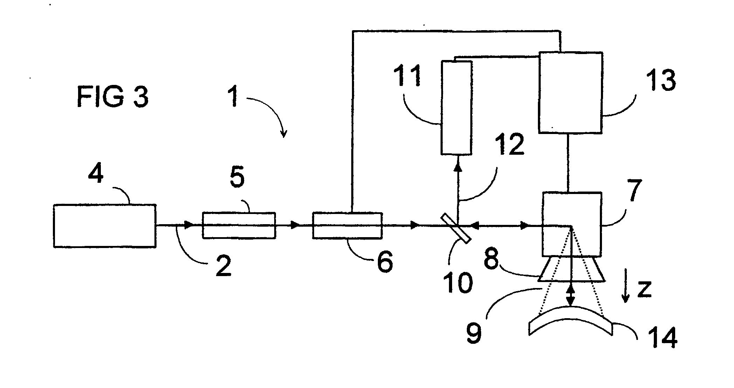

Zum Bearbeiten von beispielsweise gewölbten Werkstücken 14, wie in Figur 3 dargestellt ist, wird zusätzlich der Einfluß der geometrischen Form und/oder der optischen Abbildungseigenschaften der Werkstücke 14 ermittelt. Dazu werden Referenzpunkte, die bereits auf dem Werkstück 14 vorhanden sind, über das Objektiv 8 und die Ablenkeinrichtung 7 sowie den Spiegel 10 auf die Kamera 11 abgebildet. In der Steuereinrichtung 13 wird dann aus den bereits vorher ermittelten Abbildungsfehlern und dem optischen Versatz der Werkstückeinfluß ermittelt. Das Verfahren kann dann anschließend für gleichartige Werkstücke benutzt werden, um die Einrichtung zur Modulation des optischen Weges 6 derart zu steuern, daß der Brennpunkt des Laserstrahls 2 sich optimal an der Oberfläche des Werkstücks 14 orientiert.

Durch dieses Verfahren und die Anordnung werden unter anderem auch die durch die Ansteuerung der Motoren für die Spiegel der Ablenkeinrichtung 7 hervorgerufenen Fehler berücksichtigt.

## Patentansprüche

1. Verfahren zum Kalibrieren einer Laserbearbeitungsmaschine (1) zum Bearbeiten von Werkstücken (14) mit einer Laserquelle (4), einer Einrichtung (5,6) zum Formen des Laserstrahls (2), einer Ablenkeinheit (7) für den Laserstrahl (2) und einem Objektiv (8), bei dem
eine Testplatte (15) anstelle des Werkstücks (14) vor dem Objektiv (8) positioniert wird,
mittels einer vorgegebenen Ansteuerung der Ablenkeinheit (7) durch den Laserstrahl (2) eine Testmarkierung auf die Testplatte (15) geschrieben wird und
die Position der Testmarkierung vermessen wird,
wobei eine Kalibrierplatte (3) anstelle der zu bearbeitenden Werkstücke (14) vor dem Objektiv (8) positioniert wird,
eine Kamera (11) das durch das Objektiv (8) und die Ablenkeinheit (7) erzeugte Abbild der Kalibrierplatte (3) aufnimmt, in dem das Gesichtsfeld der Kamera (11) durch die Ablenkeinheit (7) gesteuert über die Kalibrierplatte (3) bewegt wird, in einer der Kamera (11) nachgeschalteten Steuereinheit (13) aus dem Abbild durch die Ablenkeinheit (7), das Objektiv (8) und die Kamera (11) hervorgerufene Abbildungsfehler bestimmt werden,
aus der gemessenen Position der Testmarkierung unter Berücksichtigung der Abbildungsfehler ein optischer Versatz der Laserquelle (4) und der Einrichtung (5,6) zum Formen des Laserstrahls (2) bestimmt wird,
und der optische Versatz und die Abbildungsfehler gespeichert und bei der Bearbeitung von Werkstücken (14) kompensiert werden.

2. Verfahren zum Kalibrieren einer Laserbearbeitungsmaschine (1) nach Anspruch 1,
**dadurch gekennzeichnet,**
**daß** das Gesichtsfeld der Kamera (11) durch die Ablenkeinheit (7) über die Testplatte (15) bewegt und die Position der Testmarkierungen vermessen wird.

3. Verfahren zum Kalibrieren einer Laserbearbeitungsmaschine (1) nach einem der Ansprüche 1 oder 2,
**dadurch gekennzeichnet,**
**daß** die Abbildung der Kalibrierplatte (3) durch einen im Strahlengang zwischen der Einrichtung (5,6) zum Formen des Laserstrahls (2) und der Ablenkeinheit (7) angeordneten, für das Laserlicht transparenten und für das Licht, mit dem die Kamera (11) die Kalibrierplatte (3) aufnimmt, reflektierenden Spiegel (10) auf die Kamera (11) umgelenkt wird.

4. Verfahren zum Kalibrieren einer Laserbearbeitungsmaschine (1) nach einem der Ansprüche 1, 2 oder 3,
**dadurch gekennzeichnet,**
**daß** mit der Kamera (11) an einem der zu bearbeitenden Werkstücke (14) angeordnete Referenzpunkte aufgenommen werden,
**daß** in der Steuereinheit (13) unter Berücksichtigung der Abbildungsfehler und des optischen Versatzes der Werkstückeinfluß auf die Abbildung bestimmt, abgespeichert und bei der Bearbeitung von Werkstücken (14) berücksichtigt wird.

5. Verwendung des Verfahrens nach Anspruch 4 zur Bereitstellung von Daten zur Strukturierung von nichtebenen Flächen von Werkstücken (14)
**dadurch gekennzeichnet,**
**daß** der optische Weg des Laserstrahls (2) durch eine Einrichtung (6) zur Modulation des optischen Wegs, die durch die Steuereinrichtung (13) gesteuert wird, so verändert wird, daß der Brennpunkt der Abbildung durch das Objektiv (8) entsprechend der geometrischen Form des Werkstücks (14) angepaßt wird.

6. Laserbearbeitungsmaschine mit einer Anordnung zur Kalibrierung derselben zur Bearbeitung von Werkstücken (14), insbesondere zur Durchführung eines Verfahrens nach einem der Ansprüche 1 bis 5, mit
einer Laserquelle (4),
einer Einrichtung (5,6) zum Formen des Laserstrahls (2), einer Ablenkeinrichtung (7) für den Laserstrahl (2),
einer Kamera (11) zur visuellen Beobachtung des Werkstücks (14),
einer Steuereinrichtung (13) für die Ablenkeinrichtung (7), die Kamera (11) und die Einrichtung (6) zum Formen des Laserstrahls,
einem Objektiv (8) zur Bündelung des abgelenkten Laserstrahls (2) auf das Werkstück (14),
einem teildurchlässigen Spiegel (10) im Strahlengang, der den Laserstrahl in Richtung des Werkstücks (14) und das Licht vom Werkstück (14) in Richtung der Kamera (11) lenkt, wobei der teildurchlässige Spiegel (10) zwischen der Einrichtung (5,6) zum Formen des Laserstrahls (2) und der Ablenkeinrichtung (7) angeordnet ist, und wobei die Steuereinrichtung (13) geeignet ist zum Speichern und zum Ermitteln der durch die Ablenkeinrichtung (7), das Objektiv (8) und die Kamera (11) hervorgerufenen Abbildungsfehler sowie eines optischen Versatzes der Laserquelle (4) und der Einrichtung (5,6).

7. Laserbearbeitungsmaschine nach Anspruch 6,
**dadurch gekennzeichnet,**
**daß** die Einrichtung (5,6) zum Formen des Laserstrahls (2) eine Einrichtung (5) zur Aufweitung des Laserstrahls (2) und eine Einrichtung (6) zur Modulation des optischen Wegs des Laserstrahls (2) umfaßt.

## Claims

1. Method for calibrating a laser processing machine (1) for processing workpieces (14) having a laser source (4), a device (5, 6) for shaping the laser beam (2), a deflection unit (7) for the laser beam (2), and an objective (8), in which
instead of the workpiece (14), a test plate (15) is positioned in front of the objective (8),
a test marking is written onto the test plate (15) by the laser beam (2) by means of predetermined driving of the deflection unit (7), and
the position of the test marking is measured,
a calibration plate (3) being positioned in front of the objective (8) instead of the workpieces (14) to be processed,
a camera (11) recording the image of the calibration plate (3), the said image being generated by the objective (8) and the deflection unit (7), by the field of view of the camera (11) being moved over the calibration plate (3) under the control of the deflection unit (7),
imaging errors caused by the deflection unit (7), the objective (8) and the camera (11) being determined from the image in a control unit (13) connected downstream of the camera (11),
an optical offset of the laser source (4) and of the device (5, 6) for shaping the laser beam (2) being determined from the measured position of the test marking taking account of the imaging errors,
and the optical offset and the imaging errors being stored and compensated for during the processing of workpieces (14).

2. Method for calibrating a laser processing machine (1) according to Claim 1,
**characterized**
**in that** the field of view of the camera (11) is moved over the test plate (15) by the deflection unit (7) and the position of the test markings is measured.

3. Method for calibrating a laser processing machine (1) according to either of Claims 1 and 2,
**characterized**
**in that** the image of the calibration plate (3) is diverted to the camera (11) by a mirror (10), which is arranged in the beam path between the device (5, 6) for shaping the laser beam (2) and the deflection unit (7), is transparent to the laser light and is reflective to the light with which the camera (11) records the calibration plate (3).

4. Method for calibrating a laser processing machine (1) according to one of Claims 1, 2 and 3,
**characterized**
**in that** reference points arranged on one of the workpieces (14) to be processed are recorded by the camera (11),
**in that**, in the control unit (13), taking account of the imaging errors and the optical offset, the workpiece influence on the imaging is determined, stored and taken into account during the processing of workpieces (14).

5. Use of the method according to Claim 4 for providing data for structuring non-planar areas of workpieces (14),
**characterized**
**in that** the optical path of the laser beam (2) is altered by a device (6) for modulating the optical path, the said device being controlled by the control device (13), in such a way that the focal point of the imaging by the objective (8) is adapted in accordance with the geometrical shape of the workpiece (14).

6. Laser processing machine having an arrangement for calibrating the same for processing workpieces (14), in particular for carrying out a method according to one of Claims 1 to 5, having
a laser source (4),
a device (5, 6) for shaping the laser beam (2),
a deflection device (7) for the laser beam (2),
a camera (11) for visually observing the workpiece (14),
a control device (13) for the deflection device (7), the camera (11) and the device (6) for shaping the laser beam,
an objective (8) for focussing the deflected laser beam (2) onto the workpiece (14),
a partly transparent mirror (10) in the beam path, which mirror deflects the laser beam in the direction of the workpiece (14) and the light from the workpiece (14) in the direction of the camera (11),
the partly transparent mirror (10) being arranged between the device (5, 6) for shaping the laser beam (2) and the deflection device (7), the control device (13) being suitable for storing and for determining the imaging errors caused by the deflection device (7), the objective (8) and the camera (11), and also an optical offset of the laser source (4) and of the device (5, 6).

7. Laser processing machine (1) according to Claim 6,
**characterized**
**in that** the device (5, 6) for shaping the laser beam (2) comprises a device (5) for expanding the laser beam (2) and a device (6) for modulating the optical path of the laser beam (2).

## Revendications

1. Procédé pour l'étalonnage d'une machine (1) d'usinage par laser destinée au traitement de pièces à usiner (14), dotée d'une source laser (4), d'un dispositif (5, 6) pour la mise en forme du faisceau laser (2), d'une unité (7) de déviation du faisceau laser (2) et d'un objectif (8), dans lequel:
- une plaque de test (15) est placée devant l'objectif (8) au lieu de la pièce à usiner (14),
- au moyen d'une commande prédéterminée de l'unité de déviation (7), un repérage de test est gravé par le faisceau laser (2) sur la plaque de test (15) et
- la position du repérage de test est mesurée,
- une plaque d'étalonnage (3) étant positionnée devant l'objectif (8) au lieu de la pièce à usiner (14),
- une caméra (11) enregistrant l'image de la plaque d'étalonnage (3) créée par l'intermédiaire de l'objectif (8) et du dispositif de déviation (7), le champ de vision de la caméra (11) étant déplacé sur la plaque d'étalonnage (3) sous la commande du dispositif de déviation (7), les erreurs d'imagerie provoquées par l'unité de déviation (7), l'objectif (8) et la caméra (11) étant déterminées à partir de l'image dans une unité de commande (13) raccordée en aval de la caméra (11).
- un décalage optique de la source laser (4) et du dispositif (5, 6) de mise en forme du faisceau laser (2) étant déterminé à partir de la position mesurée du repérage de test en tenant compte des erreurs d'imagerie, et
- le décalage optique et les erreurs d'imagerie sont conservés en mémoire et sont compensés lors de l'usinage de pièces à usiner (14).

2. Procédé d'étalonnage d'une machine (1) d'usinage par laser selon la revendication 1, **caractérisé en ce que** le champ de vision de la caméra (11) est déplacé par l'unité de déviation (7) sur la plaque de test (15) et la position des repérages de test est mesurée.

3. Procédé pour l'étalonnage d'une machine (1) d'usinage par laser selon l'une des revendications 1 ou 2, **caractérisé en ce que** l'image de la plaque d'étalonnage (3) est déviée sur la caméra (11) par un miroir réfléchissant (10) disposé dans le parcours du faisceau entre le dispositif (5, 6) de mise en forme du faisceau laser (2) et l'unité de déviation (7), et transparent pour la lumière laser et pour la lumière par laquelle la caméra (11) enregistre la plaque d'étalonnage (3).

4. Procédé pour l'étalonnage d'une machine (1) d'usinage par laser selon l'une des revendications 1, 2 ou 3, **caractérisé en ce que** des points de référence disposés sur une des pièces à usiner (14) sont enregistrés par la caméra (11) et **en ce que** l'influence de la pièce à usiner sur la formation de l'image est déterminée, mise en mémoire et prise en compte lors de l'usinage de pièces à usiner (14) dans l'unité de commande (13) en tenant compte des erreurs d'imagerie et du décalage optique.

5. Utilisation du procédé selon la revendication 4 pour la préparation de données de structuration de surfaces non planes de pièces à usiner (14), **caractérisée en ce que** le parcours optique du faisceau laser (2) est modifié par un dispositif (6) de modulation du parcours optique qui est commandé par l'unité de commande (13) de telle sorte que le point focal de l'image qui traverse l'objectif (8) soit adapté à la forme géométrique de la pièce à usiner (14).

6. Machine d'usinage par laser dotée d'un agencement d'étalonnage pour l'usinage de pièces à usiner (14), en particulier pour la mise en oeuvre d'un procédé selon l'une des revendications 1 à 5, avec:
- une source laser (4),
- un dispositif (5, 6) pour la mise en forme du faisceau laser (2),
- un dispositif de déviation (7) pour le faisceau laser (2),
- une caméra (11) pour l'observation visuelle de la pièce à usiner (14),
- un dispositif de commande (13) pour le dispositif de déviation (7), la caméra (11) et le dispositif (6) de mise en forme du faisceau laser,
- un objectif (8) pour concentrer sur la pièce à usiner (14) le faisceau laser (2) dévié,
- un miroir (10) partiellement transparent dans le parcours du faisceau, qui dévie le faisceau laser en direction de la pièce à usiner(14) et la lumière de la pièce à usiner (14) en direction de la caméra (11), le miroir (10) partiellement transparent étant disposé entre le dispositif (5, 6) de mise en forme du faisceau laser (2) et le dispositif de déviation (7), le dispositif de commande (13) convenant pour mettre en mémoire et déterminer les erreurs d'imagerie provoquées par le dispositif de déviation (7), l'objectif (8) et la caméra (11) ainsi qu'un décalage optique de la source laser (4) et du dispositif (5, 6).

7. Machine d'usinage par laser selon la revendication 6, **caractérisée en ce que** le dispositif (5, 6) pour la mise en forme du faisceau laser (2) comprend un dispositif (5) pour élargir le faisceau laser (2) et un dispositif (6) pour moduler le parcours optique du faisceau laser (2).
